# EUROPÄISCHE PATENTSCHRIFT

(11) **EP 0 840 755 B1**
(45) Veröffentlichungstag und Bekanntmachung des Hinweises auf die Patenterteilung: **10.01.2001**
(21) Anmeldenummer: 96925686.6
(22) Anmeldetag: 09.07.1996
(51) Int. Cl.: C08F 8/12, C08F 261/04, C08F 263/02, C08F 283/06, C08F 291/00

(54) **PFROPFPOLYMERISATE AUS VINYLESTER- UND/ODER VINYLALKOHOL-EINHEITEN ENTHALTENDEN POLYMERISATEN UND ETHYLENISCH UNGESÄTTIGTEN VERBINDUNGEN, VERFAHREN ZU IHRER HERSTELLUNG UND IHRE VERWENDUNG**
GRAFT POLYMERS FROM POLYMERS CONTAINING VINYL ESTER AND/OR VINYL ALCOHOL UNITS AND ETHYLENICALLY UNSATURATED COMPOUNDS, PROCESS FOR THEIR PRODUCTION AND THEIR USE
POLYMERISATS GREFFES A PARTIR DE POLYMERISATS CONTENANT DES MOTIFS D'ESTER VINYLIQUE ET/OU D'ALCOOL VINYLIQUE, ET DE COMPOSES ETHYLENIQUEMENT INSATURES, PROCEDE DE PRODUCTION CORRESPONDANT ET LEUR UTILISATION

(30) Priorität: 21.07.1995 DE 19526626
(43) Veröffentlichungstag der Anmeldung: 13.05.1998
(73) Patentinhaber: BASF AKTIENGESELLSCHAFT, 67056 Ludwigshafen (DE)
(72) Erfinder: DENZINGER, Walter, D-67346 Speyer (DE); RÜBENACKER, Martin, D-67122 Altrip (DE); NILZ, Claudia, D-67127 Rödersheim-Gronau (DE); LORENCAK, Primoz, D-67069 Ludwigshafen (DE); MÖNCH, Dietmar, D-69469 Weinheim (DE); SCHUHMACHER, Rudolf, D-67459 Böhl-Iggelheim (DE); STANGE, Andreas, D-68199 Mannheim (DE)
(86) Internationale Anmeldenummer: EP9602991
(87) Internationale Veröffentlichungsnummer: WO9704014

(56) Entgegenhaltungen:
- EP-A- 0 363 319
- EP-A- 0 617 166
- WO-A-95/32227
- DE-A- 4 030 358
- US-A- 5 334 287
- DATABASE WPI Week 9431 Derwent Publications Ltd., London, GB; AN 94-252866 XP002017672 & JP,A,06 184 251 (SHOWA DENKO) , 5.Juli 1994

## Beschreibung

Die Erfindung betrifft Pfropfpolymerisate aus Vinylester- und/oder Vinylalkohol-Einheiten enthaltenden Polymerisaten und offenkettigen N-Vinylcarbonsäureamiden, Verfahren zu ihrer Herstellung und die Verwendung der Pfropfpolymerisate bei der Herstellung von Papier, Pappe und Karton, als Dispergiermittel für Pigmente und als Stärkekationisierungsmittel.

Aus der US-A-4 880 497 und der US-A-4 978 427 ist jeweils die Herstellung von Papier mit hoher Trockenfestigkeit und Naßfestigkeit bekannt, wobei man entweder auf die Oberfläche des Papiers oder zum Papierstoff vor der Blattbildung ein hydrolysiertes Copolymerisat als Verfestigungsmittel verwendet, das durch Copolymerisation von N-Vinylformamid und ethylenisch ungesättigten Monomeren, wie beispielsweise Vinylacetat, Vinylpropionat oder Alkylvinylether und Hydrolysieren von 30 bis 100 mol-% der Formylgruppen des Copolymerisats unter Bildung von Aminogruppen erhältlich ist. Die hydrolysierten Copolymeren werden in Mengen von 0,1 bis 5 Gew.-%, bezogen auf trockene Fasern, eingesetzt.

Aus der EP-A-0 363 319 sind Pfropfpolymerisate bekannt, die durch radikalische Polymerisation von gegebenenfalls N-substituiertem Acrylamid oder Methacrylamid und N-vinylsubstituierten Amiden oder Vinylestern einer gesättigten aliphatischen Monocarbonsäure in Gegenwart von Anlagerungsprodukten von Alkylenoxiden an einen mindestens 3-wertigen aliphatischen Alkohol mit 3 bis 10 Kohlenstoffatomen erhältlich sind. Die Pfropfpolymerisate werden beim Färben von Cellulosefasern mit substantiven Farbstoffen oder Reaktivfarbstoffen als Färbehilfsmittel verwendet.

Aus der US-A-5 334 287 sind Pfropfpolymerisate bekannt, die durch radikalisch initiierte Polymerisation von N-Vinylcarbonsäureamiden, vorzugsweise N-Vinylformamid, und gegebenenfalls anderen Monomeren in Gegenwart von Monosacchariden, Oligosacchariden, Polysacchariden oder jeweils deren Derivaten und gegebenenfalls Hydrolyse der einpolymerisierten Gruppe N-Vinylcarbonsäureamide unter Bildung von Vinylamineinheiten erhältlich sind. Die Pfropfpolymerisate werden als Trocken- und Naßverfestigungsmittel bei der Herstellung von Papier, Pappe und Karton verwendet.

Gegenstand der älteren, nicht vorveröffentlichten DE-Anmeldung 19515943.8 sind Pfropfpolymerisate, die erhältlich sind durch radikalisch initiierte Polymerisation von
(A) Monomeren oder Monomergemischen aus
   (a) 10 bis 100 Gew.-% N-Vinylcarbonsäureamiden der Formel 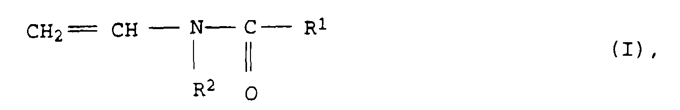 in der R¹, R² = H und C₁- bis C₆-Alkyl bedeuten,
   (b) 0 bis 90 Gew.-% anderen, mit den Monomeren (a) copolymerisierbaren monoethylenisch ungesättigten Monomeren und
   (c) 0 bis 5 Gew.-% mindestens zwei ethylenisch ungesättigten, nicht konjugierte Doppelbindungen im Molekül aufweisenden Monomeren
   in Gegenwart von
(B) Polymerisaten, die mindestens 3 Einheiten eines C₂- bis C₄-Alkylenoxids enthalten, und/oder Polytetrahydrofuranen im Gewichtsverhältnis (A):(B) von (95 bis 10):(5 bis 50) und anschließende zumindest teilweise Abspaltung der Gruppierung 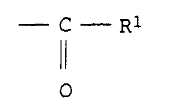 aus den einpolymerisierten Monomeren (a) des Pfropfpolymerisats unter Bildung von Einheiten der Formel 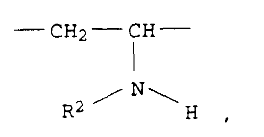 Verfahren zur Herstellung der Pfropfpolymerisate sowie Verwendung der Pfropfpolymerisate bei der Papierherstellung als Trocken- und Naßverfestigungsmittel, als Fixiermittel für Störstoffe und Farbstoffe, als Retentions- und Entwässerungsmittel und als Promoter bei der Diketenleimung. Die Pfropfpolymerisate werden außerdem als Stärkekationierungsmittel und als Dispergiermittel für Pigmente verwendet.

Aus der JP-A-06/184 251 sind wasserlösliche thermoplastische Filme bekannt, die ein Homopolymerisat von N-Vinylacetamid oder ein Copolymerisat von N-Vinylacetamid und einem Vinylmonomer auf Polyvinylalkohol aufgepfropft enthalten. Die Filme werden z.B. als wasserlösliche Verpackungsmaterialien verwendet.

Der vorliegenden Erfindung liegt die Aufgabe zugrunde, neue Stoffe zur Verfügung zu stellen. Eine weitere Aufgabe besteht darin, Prozeßhilfsmittel für die Herstellung von Papier, Pappe und Karton zur Verfügung zu stellen.

Die Aufgabe wird erfindungsgemäß gelöst mit Pfropfpolymerisaten aus Vinylester- und/oder Vinylalkohol-Einheiten enthaltenden Polymerisaten und ethylenisch ungesättigten Verbindungen, wobei die Pfropfpolymerisate erhältlich sind durch radikalisch initiierte Polymerisation von
(A) Monomeren oder Monomergemischen aus
   (a) 1 bis 100 Gew.-% N-Vinylformamid,
   (b) 0 bis 99 Gew.-% anderen, mit den Monomeren (a) copolymerisierbaren monoethylenisch ungesättigten Monomeren und
   (c) 0 bis 5 Gew.-% mindestens zwei ethylenisch ungesättigten, nicht konjugierte Doppelbindungen im Molekül aufweisenden Monomeren
   in Gegenwart von
(B) Polymerisaten, die Einheiten von Vinylestern von gesättigten C₁- bis C₄-Carbonsäuren und/oder Vinylalkohol-Einheiten enthalten, oder von Mischungen, die diese Polymerisate und mindestens 3 Alkylenoxid-Einheiten aufweisende Polymerisate oder Polytetrahydrofuran enthalten,
im Gewichtsverhältnis (A):(B) von (95 bis 10):(5 bis 90) und anschließende Abspaltung von 1 bis 100 % der Formylgruppen des aufgepfropften N-Vinylformamids durch Hydrolyse
unter Bildung von Einheiten der Formel

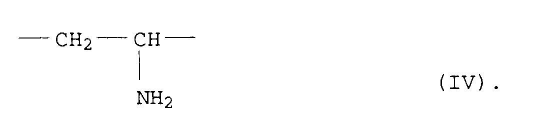

Gegenstand der Erfindung ist außerdem ein Verfahren zur Herstellung von Pfropfpolymerisaten aus Vinylester- und/oder Vinylalkohol-Einheiten enthaltenden Polymerisaten und ethylenisch ungesättigten Verbindungen, das dadurch gekennzeichnet ist, daß man
(A) Monomere oder Monomergemische aus
   (a) 1 bis 100 Gew.-% N-Vinylformamid,
   (b) 0 bis 99 Gew.-% anderen, mit den Monomeren (a) copolymerisierbaren carboxylgruppenfreien monoethylenisch ungesättigten Monomeren und
   (c) 0 bis 5 Gew.-% mindestens zwei ethylenisch ungesättigten, nicht konjugierte Doppelbindungen im Molekül aufweisenden Monomeren
   in Gegenwart von
(B) Polymerisaten, die Einheiten von Vinylestern von gesättigten C₁- bis C₄-Carbonsäuren und/oder Vinylalkohol-Einheiten enthalten, oder von Mischungen, die diese Polymerisate und mindestens 3 Alkylenoxid-Einheiten aufweisende Polymerisate oder Polytetrahydrofuran enthalten,
im Gewichtsverhältnis (A):(B) von (95 bis 10):(5 bis 90) radikalisch polymerisiert und anschließend Formylgruppen durch Hydrolyse aus dem aufgepfropften N-Vinylformamid
des Pfropfpolymerisats zumindest teilweise unter Bildung von Einheiten der Formel 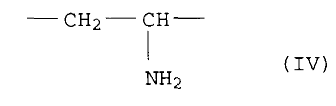 abspaltet.

Gegenstand der Erfindung ist außerdem die Verwendung der oben beschriebenen Pfropfpolymerisate bei der Herstellung von Papier, Pappe und Karton als Trocken- und Naßverfestigungsmittel, als Retentions- und Entwässerungsmittel und als Promoter bei der Diketenleimung sowie als Stärkekationisierungsmittel, als Dispergiermittel für Pigmente und als Krepphilfsmittel bei der Herstellung von Tissuepapieren.

Als Monomer (A) wird vorzugsweise N-Vinylformamid eingesetzt. Aus den so erhältlichen Pfropfpolymerisaten werden in einem weiteren Verfahrensschritt 2 bis 100, vorzugsweise 30 bis 95 % der Formylgruppen des auf gepfropften bzw. einpolymerisierten N-Vinylformamids unter Bildung von Einheiten der Formel 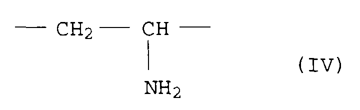 abgespalten. Bevorzugt eingesetzte Monomergemische bestehen aus 1 bis 99 Gew.-% N-Vinylformamid und 99 bis 1 Gew.-% Vinylformiat, Vinylacetat, Vinylpropionat, Acrylnitril, N-Vinylpyrrolidon, N-Vinylcaprolactam, Acrylsäure oder Mischungen der genannten Monomeren. Aus den so erhältlichen Pfropfpolymerisaten werden 1 bis 100, vorzugsweise 30 bis 95 % der Formylgruppen des einpolymerisierten N-Vinylformamids abgespalten. Je nach Hydrolysebedingungen können auch die einpolymerisierten Comonomeren chemisch verändert werden, z.B. entstehen aus den einpolymerisierten Vinylestern Vinylalkoholeinheiten.

Zur Herstellung der Pfropfpolymerisate kommen als Monomere der Gruppe (a) N-Vinylformamid in Betracht

Das oben genannten N-Vinylformamid kann gegebenenfalls mit anderen, damit copolymerisierbaren monomethylenisch ungesättigten Monomeren bei der Pfropfpolymerisation eingesetzt werden. Geeignete Monomere der Gruppe (b) sind beispielsweise Vinylester von gesättigten Carbonsäuren mit 1 bis 6 Kohlenstoffatomen, z.B. Vinylformiat, Vinylacetat, Vinylpropionat und Vinylbutyrat. Außerdem eignen sich die Ester, Amide und Nitrile von monoethylenisch ungesättigten C₃- bis C₆-Carbonsäuren. Geeignete Amide sind beispielsweise Acrylamid, Methacrylamid sowie N-Alkylmono- und -diamide mit Alkylresten von 1 bis 6 C-Atomen wie z.B. N-Methylacrylamid, N,N-Dimethylacrylamid, N-Methylmethacrylamid, N-Ethylacrylamid, N-Propylacrylamid und N-tert.-Butylacrylamid sowie deren basischen (Meth)-acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethyl-aminopropylacrylamid, Dimethylaminopropylmethacrylamid und Diethylaminopropylmethacrylamid. Auch die Ester der monoethylenisch ungesättigten Carbonsäuren mit C₁-bis C₆-Alkoholen wie z.B. Methylacrylat, Methylmethacrylat, Ethylacrylat und Ethylmethacrylat oder mit Glykolen bzw. Polyglykolen, wobei jeweils nur eine OH-Gruppe der Glykole und Polyglykole mit einer ethylenisch ungesättigten Carbonsäure verestert ist wie z.B. Hydroxyethylacrylat, Hydroxyethylmethacrylat, Hydroxypropylacrylate, Hydroxybutylacrylate, Hydroxypropylmethacrylate, Hydroxybutylmethacrylate sowie die Acrylsäuremonoester von Polyalkylenglykolen eines Molgewichts von 1500 bis 10 000. Weiterhin geeignet sind die Ester von ethylenisch ungesättigten Carbonsäuren mit Aminoalkoholen wie z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat, Diethylaminobutylacrylat, Dimethylaminopentylacrylat, Dimethylaminoneopentylmethacrylat und Dimethylaminohexylacrylat. Die basischen Acrylate und Acrylamide werden in Form der freien Basen, der Salze mit Mineralsäuren wie z.B. Salzsäure, Schwefelsäure und Salpetersäure oder in quaternisierter Form eingesetzt. Geeignete Quaternisierungsmittel sind beispielsweise Dimethylsulfat, Methylchlorid, Ethylchlorid, Benzylchlorid oder Diethylsulfat. Geeignet sind auch monoethylenisch ungesättigte Mono- und Dicarbonsäuren(anhydride) mit 3 bis 6 Atomen wie z.B. Acrylsäure, Methacrylsäure, Crotonsäure, Maleinsäure(anhydrid), Fumarsäure, Itakonsäure(anhydrid) und Zitraconsäure (anhydrid).

Weiterhin sind als Monomere der Gruppe (b) geeignet N-Vinylpyrrolidon, N-Vinylcaprolactam, Acrylnitril, Methacrylnitril, N-Viny-limidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol und N-Vinylimidazoline wie z.B. N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren neutralisierter oder in quaternisierter Form eingesetzt, wobei die Quaternisierung vorzugsweise mit Dimethylsulfat, Diethylsulfat, Benzylchlorid, Methylchlorid oder Ethylchlorid vorgenommen wird.

Außerdem eignen sich als Monomere (b) Sulfogruppen enthaltende Monomere wie beispielsweise Vinylsulfonsäure, Allylsulfonsäure, Methallylsulfonsäure, Styrolsulfonsäure, Acrylsäure-3-sulfopropylester, Methacrylsäure-3-sulfopropylester und 2-Acrylamido-2-methylpropansulfonsäure. Die Säuregruppen aufweisenden Verbindungen können in Form der freien Säuren, der Ammonium-, Alkalimetall- und Erdalkalimetallsalze bei der Pfropfpolymerisation eingesetzt werden.

Von den Monomeren (b) werden Vinylformiat, Vinylacetat, Vinylpropionat, Acrylnitril, N-Vinylpyrrolidon, N-Vinylcaprolactam und Acrylsäure bevorzugt.

Bei der Herstellung der Pfropfpolymerisate werden Monomergemische aus 1 bis 100 Gew.-% mindestens eines Monomer der Gruppe (a) und 0 bis 99 Gew.-% mindestens eines Monomer der Gruppe (b) eingesetzt.

Eine Modifizierung der Pfropfcopolymerisate kann dadurch erreicht werden, daß man die Monomeren (a) oder Monomermischungen aus (a) i und (b) mit bis zu 5 Gew.% eines mindestens zwei ethylenisch ungesättigte nicht-konjugierte Doppelbindungen im Molekül aufweisenden Monomeren (c) in Gegenwart der Verbindungen (B) copolymerisiert. Die Verbindungen (c) werden üblicherweise bei Copolymerisationen als Vernetzer verwendet. Sie können in den zur Copolymerisation eingesetzten Monomermischungen aus (a) und gegebenenfalls (b) zugesetzt werden. Im Falle ihres Einsatzes beträgt die bevorzugt verwendete Menge 0,05 bis 2 Gew.%. Die Mitverwendung der Monomeren der Gruppe (c) während der Copolymerisation bewirkt eine Erhöhung der Molmassen der Copolymerisate. Geeignete Verbindungen dieser Art sind beispielsweise Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat, sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3.000.

Die Polymerisation der Monomeren (a), sowie die der Monomeren (a) und (b) sowie gegebenenfalls jeweils noch zusätzlich (c) erfolgt erfindungsgemäß in Gegenwart von (B) Polymerisaten, die Einheiten von Vinylestern von gesättigten C₁- bis C₄-Carbonsäuren und/oder Vinylalkohol-Einheiten enthalten. Derartige Polymerisate enthalten Einheiten von Vinylestern von gesättigten C₁- bis C₄-Carbonsäuren und/oder Vinylalkohol-Einheiten. Solche Polymerisate sind bekannt. Sie werden z.B. durch Polymerisieren von Vinylestern von gesättigten C₁- bis C₄-Carbonsäuren wie Vinylformiat, Vinylacetat, Vinylpropionat, Vinyl-n-butyrat, Vinylisobutyrat oder Mischungen der genannten Vinylester in Gegenwart von Radikale bildenden Verbindungen hergestellt. Durch partielle oder vollständige Hydrolyse der so erhältlichen Polymeren, z.B. durch Einwirkung von wäßriger Natronlauge oder Kalilauge auf die Polymerisate, entstehen daraus Vinylalkohol-Einheiten enthaltende Polymerisate.

Als Pfropfgrundlage (B) eignen sich außer den oben genannten Polymeren noch Copolymerisate der Vinylester von gesättigten C₁- bis C₄-Carbonsäuren mit anderen, monoethylenisch ungesättigten Monomeren, die mit den Vinylestern copolymerisierbar sind. Diese Copolymerisate enthalten vorzugsweise mindestens 20 Gew.-% mindestens eines Vinylesters einpolymerisiert. Geeignete Comonomere sind beispielsweise N-Vinylpyrrolidon, N-Vinylcaprolactam, Maleinsäureanhydrid, Maleinsäure, Acrylsäure, Methacrylsäure, N-Vinylformamid, Styrol, Vinylbutylether, Vinylethylether, Vinylchlorid, Butylacrylat, Ethylhexylacrylat, Acrylnitril, N-Vinylcarbazol, Isobuten und/oder Methylmethacrylat. Bei der Copolymerisation der Vinylester kann man gegebenenfalls auch Mischungen aus zwei oder mehreren Comonomeren einsetzen, z.B. kann man Vinylacetat mit N-Vinylpyrrolidon und N-Vinylformamid copolymerisieren. Als Komponente (B) kommen auch Polymergemische in Betracht, die
(1) die oben beschriebenen Vinylester- und/oder Vinylalkohol-Einheiten enthaltenden Polymerisate und
(2) mindestens 3 Alkylenoxid-Einheiten aufweisende Polymerisate oder Polytetrahydrofuran
enthalten.

Alkylenoxideinheiten enthaltende Polymere und Polytetrahydrofurane sind bekannt. Von besonderem Interesse sind die Homo- und Copolymerisate von C₂- bis C₄-Alkylenoxiden. Sie werden beispielsweise durch Homo- oder Copolymerisation von Ethylenoxid, Propylenoxid, n-Butylenoxid und/oder Isobutylenoxid hergestellt. Bei den Copolymerisaten kann es sich entweder um statistische Copolymerisate handeln, wenn man Mischungen aus mindestens 2 Alkylenoxiden polymerisiert oder um Blockcopolymerisate, wenn man zunächst ein Alkylenoxid, beispielsweise Ethylenoxid polymerisiert und dann ein anderes Alkylenoxid polymerisiert, z.B. Propylenoxid. Die Blockcopolymerisate können beispielsweise dem Typ AB, ABA oder BAB zugeordnet werden, wobei A beispielsweise ein Polyethylenoxidblock und B ein Block aus Polypropylenoxid bedeutet. Diese Copolymerisate können gegebenenfalls außerdem noch n-Butylenoxid und/oder Isobutylenoxid einpolymerisiert enthalten. Die Polyethylenoxide enthalten mindestens 3 Alkylenoxideinheiten im Molekül. Die Polyalkylenoxide können beispielsweise bis zu 50 000 Alkylenoxideinheiten im Molekül enthalten. Bevorzugt kommen solche Polyalkylenoxide in Betracht, die 3 bis 1 000 Alkylenoxideinheiten im Molekül aufweisen. Die Polytetrahydrofurane enthalten beispielsweise 3 bis 200, vorzugsweise 3 bis 100 Tetramethylenoxideinheiten.

Bevorzugt zum Einsatz gelangende Verbindungen sind Homo- oder Blockcopolymerisate von Ethylenoxid und Propylenoxid sowie statistisch aufgebaute Copolymerisate aus Ethylenoxid und Propylenoxid, die durch Copolymerisieren eines Mischgases aus Ethylenoxid und Propylenoxid erhältlich sind. Unter Alkylenoxideinheiten enthaltenden Polymerisaten sollen im Sinne der vorliegenden Erfindung auch Additionsprodukte von C₂- bis C₄-Alkylenoxiden an Alkohole, Phenole, Carbonsäuren und Amine verstanden werden.

Für die Umsetzung mit den Alkylenoxiden in Betracht kommenden Alkohole haben beispielsweise 1 bis 30 Kohlenstoffatome, wie Methanol, Ethanol, n-Propanol, iso-Propanol, n-Butanol, n-Octanol, 2-Ethylhexanol, Decanol, Dodecanol, Palmitylalkohol, Cetylalkohol und Stearylalkohol. Von technischem Interesse sind insbesondere die nach dem Oxoverfahren erhältlichen Alkohole, z.B. C₁₀-Alkohole, C₁₃-Oxoalkohole oder native Alkohole wie C₁₀/C₁₈-Talgfettalkohole.

Außer den genannten einwertigen Alkoholen kann man selbstverständlich auch 2- und mehrwertige Alkohole zum Starten der Polymerisation der Alkylenoxide einsetzen, z.B. Glykol, Glycerin, Erythrit, Pentaerythrit und Sorbit. Die Alkohole werden im Molverhältnis 1:3 bis 1:200 mit mindestens einem C₂- bis C₄-Alkylenoxid umgesetzt.

Weitere geeignete Alkylenoxideinheiten enthaltende Polymere sind Umsetzungsprodukte von Fettsäuren mit Alkylenoxiden. Von den Fettsäuren kommen insbesondere solche in Betracht, die 8 bis 10 C-Atome im Molekül enthalten, beispielsweise Laurinsäure, Myristinsäure, Stearinsäure, Palmitinsäure, Kokosfettsäure, Talgfettsäure und Ölsäure.

Ethylenoxideinheiten enthaltende Polymere im Sinne der vorliegenden Erfindung sind außerdem die Additionsprodukte von C₂- bis C₄-Alkylenoxiden an C₁- bis C₁₂-Alkylphenole, wie n-Decylphenol, n-Octylphenol, Isobutylphenol und Methylphenol. Außerdem eignen sich als Komponente (B) für die Herstellung der Pfropfpolymerisate die Anlagerungsprodukte von C₂- bis C₄-Alkylenoxiden an sekundäre C₂- bis C₃₀-Amine wie Di-n-Butylamin, Di-n-Octylamin, Dimethylamin und Distearylamin. Das Molverhältnis von Amin zu mindestens einem Alkylenoxid beträgt 1:3 bis 1:200 und liegt vorzugsweise in dem Bereich von 1:3 bis 100. Bei den Additionsprodukten von Alkylenoxiden an Alkohole, Phenole, Säuren oder Amine kann man die Alkylenoxide in Form eines Mischgases an die vorstehend genannten Verbindungen addieren oder man führt die Umsetzung zunächst mit Ethylenoxid und anschließend mit Propylenoxid durch. Ebenso ist es möglich, zunächst Propylenoxid und anschließend Ethylenoxid an die genannten Verbindungen zu addieren. Außer Ethylenoxid und Propylenoxid kann man jeweils gegebenenfalls noch Isobutylenoxid und/oder n-Butylenoxid addieren. Bei der nacheinander erfolgenden Addition der Alkylenoxide entstehen Blockcopolymerisate. In manchen Fällen kann außerdem noch von Vorteil sein, die freien OH-Gruppen der Alkoxylierungsprodukte mit einer Endgruppe zu verschließen. Der Endgruppenverschluß kann beispielsweise mit einem Alkylrest unter Ausbildung einer Ethergruppe erfolgen. Beispielsweise kann man die Alkoxylierungsprodukte mit Alkylierungsmitteln wie Dimethylsulfat umsetzen. Die endständigen OH-Gruppen können gegebenenfalls auch durch Umsetzung mit Carbonsäuren, z.B. Essigsäure oder Stearinsäure, verestert werden.

Als Pfropfgrundlage (B) werden bevorzugt Polyvinylformiat, Polyvinylacetat sowie die daraus durch Hydrolyse erhältlichen Polymerisate eingesetzt, die bei einer partiellen Hydrolyse Vinylalkohol-Einheiten neben unveränderten Vinylester-Einheiten aufweisen. Bei einer vollständigen Hydrolyse der Polyvinylester erhält man Polyvinylalkohol. Besonders bevorzugt als Pfropfgrundlage sind solche hydrolysierten Polyvinylformiate und/oder Polyvinylacetate, die mindestens 50 Mol.-% Vinylalkohol-Einheiten enthalten.

Die Molmasse der als Komponente (B) in Betracht kommenden Polymerisate beträgt vorzugsweise 1000 bis 1 Million. Die bevorzugt als Pfropfgrundlage eingesetzten Polymerisate sind wasserlöslich oder in Wasser dispergierbar.

Zur Herstellung der Pfropfpolymerisate werden die Monomeren der Komponente (A), und zwar (a), Mischungen aus (a) und (b) und gegebenenfalls jeweils zusätzlich (c) in Gegenwart von Polymerisaten der Komponente (B) radikalisch polymerisiert. In einigen Fällen kann es für die Wirkung des entstehenden Polymerisates günstig sein, zwei oder mehrere der unter (B) angegebenen Verbindungen einzusetzen. Die Pfropfpolymerisation kann in Gegenwart oder auch in Abwesenheit von inerten Lösemitteln oder inerten Verdünnungsmitteln durchgeführt werden. Da die Polymerisation in Abwesenheit von inerten Löse- oder Verdünnungsmitteln meistens zu uneinheitlichen Polymerisaten führt, ist die Polymerisation in einem inerten Löse- oder Verdünnungsmittel bevorzugt. Geeignet sind beispielsweise solche inerten Verdünnungsmittel, in denen die unter (B) angegebenen Verbindungen suspendiert werden können und die die Monomeren (A) lösen. In diesen Fällen liegen die Polymerisate nach der Copolymerisation in suspendierter Form vor und können leicht durch Filtration in fester Form isoliert werden. Geeignete inerte Verdünnungsmittel sind beispielsweise Toluol, Xylol, o-, m-, p-Xylol und Isomerengemische, Ethylbenzol, aliphatische Kohlenwasserstoffe, wie Pentan, Hexan, Heptan, Octan, Nonan, Dodecan, Cyclohexan, Cyclooctan, Methylcyclohexan sowie Mischungen der genannten Kohlenwasserstoffe oder Benzinfraktionen, die keine polymerisierbaren Monomeren enthalten. Außerdem eignen sich Chlorkohlenwasserstoffe wie Chloroform, Tetrachlorkohlenstoff, Hexachlorethan, Dichlorethan und Tetrachlorethan. Bei der oben beschriebenen Arbeitsweise, bei der die Verbindungen der Komponente (B) in einem inerten Verdünnungsmittel suspendiert sind, setzt man vorzugsweise wasserfreie Verbindungen der Komponente (B) ein.

Eine bevorzugte Art der Herstellung der Polymerisate ist die Lösungspolymerisation, wobei die Verbindungen der Komponente (B), die Monomeren (A) und das gebildete Polymerisat zumindest dispergiert, vorzugsweise in gelöster Form vorliegen. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan, Wasser sowie Mischungen der genannten inerten Lösemittel. Die Polymerisation kann kontinuierlich oder diskontinuierlich durchgeführt werden.

Die Pfropfpolymerisate werden im allgemeinen unter Mitverwendung von radikalbildenden Initiatoren hergestellt.

Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.
Temperatur: 40 bis 60°C
   Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis-(2-methyl-N-phenylpropionamidin)dihydrochlorid, 2,2'-Azobis-(2-methylpropion-amidin)dihydrochlorid.
Temperatur: 60 bis 80°C
   tert.-Butylperpivalat, Dioctanoylperoxid, Dilauroylperoxid, 2,2'-Azobis-(2,4-dimethylvaleronitril).
Temperatur: 80 bis 100°C
   Dibenzoylperoxid, tert.-Butylper-2-ethylhexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat.
Temperatur: 100 bis 120°C
   Bis-(tert.-butylperoxid)-cyclohexan, tert.-Butylperoxiisopropylcarbonat, tert.-Butylperacetat, Wasserstoffperoxid.
Temperatur: 120 bis 140°C
   2,2-Bis-(tert.-butylperoxi)-butan, Dicumylperoxid, Di-tert.-amylperoxid, Di-tert.-butylperoxid.
Temperatur: >140°C
   p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Nickel- und Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.-% eines Polymerisationsinitiators oder einer Mischung mehrerer Polymerisationsinitiatoren. Als Redoxkomponenten setzt man 0,01 bis 15 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Pfropfpolymerisation der wesentlichen Monomeren (a) und gegebenenfalls (b) und der gegebenenfalls mitzuverwendenden Monomeren (c) kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzyldiketale können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Polymerisation zweckmäßigerweise in Gegenwart von Reglern durchgeführt. Geeignete Regler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Die Pfropfpolymerisation der Komponenten (A) und (B) erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Reaktionsteilnehmer, die vorzugsweise in einem inerten Verdünnungsmittel vorliegen, diskontinuierlich copolymerisieren, indem man das Reaktionsgemisch auf die Polymerisationstemperatur erhitzt und dann die Reaktion ablaufen läßt. Diese Temperaturen liegen dabei im Bereich von 40 bis 180°C. Um den Verlauf der Polymerisationsreaktion besser kontrollieren zu können, gibt man die Monomeren (A) bei der gewünschten Polymerisationstemperatur dem polymerisierenden Gemisch kontinuierlich oder absatzweise in dem Maße zu, daß die Polymerisation in dem gewünschten Temperaturbereich gut kontrollierbar ist. Bevorzugt ist eine Art der Zugabe der Monomeren der Komponente (A) bei der man im Polymerisationsreaktor zunächst die Verbindungen der Komponente (B) oder zumindest einen Teil der Verbindungen der Komponente (B) im Reaktor vorlegt und darin unter Rühren auf die gewünschte Polymerisationstemperatur erhitzt. Sobald diese Temperatur erreicht ist, fügt man dazu über einen Zeitraum von etwa 1 bis 10, vorzugsweise 2 bis 8 Stunden, die Monomeren (a und gegebenenfalls b) und gegebenenfalls (c) sowie den Initiator und gegebenenfalls einen Regler zu. Eine derartige Vorgehensweise wird beispielsweise beim Polymerisieren der Komponenten (A) und (B) in einem inerten Verdünnungsmittel, in dem die Komponente (B) suspendiert ist sowie auch bei der in Lösung durchgeführten Polymerisation angewendet.

Die erfindungsgemäßen Pfropfpolymerisate werden vorzugsweise durch Suspensions- oder Lösungspolymerisation der Komponenten (A) und (B) in wäßrigem Medium hergestellt, wobei die Lösungspolymerisation in Wasser besonders bevorzugt ist. Bei der Lösungspolymerisation in wäßrigem Medium geht man beispielsweise so vor, daß man mindestens einen Teil der Verbindungen der Komponente (B) in wäßrigem Medium vorlegt und die Monomeren (a und gegebenenfalls b) sowie gegebenenfalls die Monomeren (c) kontinuierlich oder absatzweise dem polymerisierenden Reaktionsgemisch zufügt. Um eine Hydrolyse der monomeren N-Vinylcarbonsäureamide während der Polymerisation in wäßriger Lösung zu vermeiden, führt man die Polymerisation vorzugsweise in einem pH-Wert-Bereich von 4 bis 9, insbesondere von 5 bis 8 durch. In vielen Fällen empfiehlt es sich, zusätzlich noch in Gegenwart von Puffern zu arbeiten, z.B. zur wäßrigen Phase primäres oder sekundäres Natriumphosphat zuzusetzen. Bei Einsatz von säuregruppenhaltigen Monomeren (b) werden diese vorzugsweise in Form der Salze eingesetzt.

Das Gewichtsverhältnis von (A):(B) beträgt (95 bis 10):(5 bis 90).

Vorzugsweise setzt man bei der Pfropfpolymerisation auf 1 Gewichtsteil der Komponente (B) 1 bis 5 Gewichtsteile der Komponente (A) ein.

Bei der Pfropfpolymerisation liegen die Temperaturen üblicherweise in dem Bereich von 40 bis 180, vorzugsweise 50 bis 150°C und insbesondere bei 60 bis 110°C. Sobald die Temperatur bei der Pfropfpolymerisation oberhalb der Siedepunkte des inerten Verdünnungs- oder Lösemittels oder der Monomeren liegt, wird die Polymerisation unter Druck durchgeführt. Die Konzentration der Komponenten (A) und (B) beträgt bei der Pfropfpolymerisation in Gegenwart von inerten Löse- oder inerten Verdünnungsmitteln 10 bis 80, vorzugsweise 20 bis 70 Gew.%. Die Herstellung der Pfropfpolymerisate kann in den üblichen Polymerisationsvorrichtungen erfolgen. Hierzu verwendet man beispielsweise Rührkessel, die mit einem Anker-, Blatt-, Impeller- oder Mehrstufenimpulsgegenstromrührer ausgestattet sind. Insbesondere bei der Polymerisation in Abwesenheit von Verdünnungsmitteln kann es vorteilhaft sein, die Polymerisation in Knetern durchzuführen. Ebenso kann es notwendig sein, in einem Kneter zu polymerisieren, wenn man bei hohen Konzentrationen arbeitet.

Man erhält Pfropfpolymerisate, die, soweit sie in Wasser löslich sind, K-Werte von 8 bis 250, vorzugsweise 10 bis 150, haben (gemessen an 1 %igen wäßrigen Lösungen der Copolymerisate bei pH 7 und 25°C). Die nach den oben angegebenen Verfahren herstellbaren Pfropfpolymerisate sind farblose bis bräunlich gefärbte Produkte. Sie liegen beim Polymerisieren in wäßrigem Medium als Dispersionen oder Polymerlösungen vor. In Abhängigkeit von der jeweiligen Zusammensetzung der Pfropfpolymerisate handelt es sich dabei um niedrigviskose bis pastöse wäßrige Lösungen oder wäßrige Dispersionen.

An die Herstellung der Pfropfpolymerisate schließt sich gegebenenfalls eine zweite Verfahrensstufe an, in der unter Einwirkung von Säuren, Basen oder Enzymen eine Hydrolyse durchgeführt wird. Bei der Hydrolyse wird aus den in das Pfropfpolymerisat einpolymerisierten Monomeren der Formel I die Gruppierung 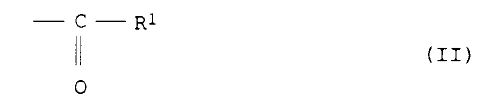 abgespalten. Man erhält hydrolysierte Pfropfpolymerisate, die in der aufgepfropften Seitenkette Einheiten der Formeln 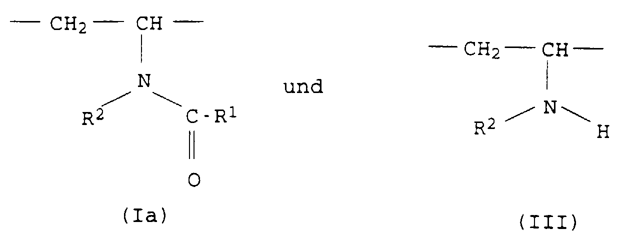 in der R¹ und R² die in Formel I angegebene Bedeutung haben. Bei der Hydrolyse der Pfropfpolymerisate können gegebenenfalls in der Pfropfgrundlage (B) erhaltene Vinylestereinheiten teilweise oder vollständig zu Vinylalkohol-Einheiten hydrolysieren. Bei einer Hydrolyse der Pfropfpolymerisate in Gegenwart von Säuren liegen die Einheiten der Formel III in Form der Salze vor, während bei der Hydrolyse in Gegenwart von Basen in Abhängigkeit vom pH-Wert die freien Amingruppen vorliegen.

In Abhängigkeit von den Reaktionsbedingungen bei der Hydrolyse, d.h. der Menge an Säure oder Base, bezogen auf das zu hydrolysierende Polymerisat, und der Reaktionstemperatur bei der Hydrolyse erhält man entweder eine partielle oder vollständige Hydrolyse der Einheiten der Formel Ia. Die Hydrolyse der Pfropfpolymerisate wird so weit geführt, daß 1 bis 100 % der in den Pfropfpolymerisaten enthaltenen Monomereinheiten der Formel (II), vorzugsweise 30 bis 95 % dieser Einheiten hydrolysiert sind. Zur Hydrolyse setzt man den in der ersten Verfahrensstufe hergestellten Pfropfpolymerisaten mindestens eine Säure oder Base zu. Geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphosphorsäure) und organische Säuren, z.B. C₁- bis C₅-Carbonsäuren, wie Ameisensäure, Essigsäure und Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man beispielsweise 0,05 bis 1,5 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Calciumhydroxid, Strontiumhydroxid und Bariumhydroxid. Ebenso können aber auch Ammoniak und Alkylderivate des Ammoniaks verwendet werden, z.B. Alkyl- oder Arylamine z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge. Die Hydrolyse im sauren oder im alkalischen pH-Bereich erfolgt z.B. bei Temperaturen von 30 bis 170, vorzugsweise 50 bis 120°C. Sie ist nach etwa 2 bis 8, vorzugsweise 3 bis 5 Stunden beendet. Nach diesen Reaktionszeiten erreicht man Hydrolysegrade der Einheiten der einpolymerisierten Monomeren der Formel 1 von 1 bis 100 %. Besonders bewährt hat sich eine Verfahrensweise, bei der zur Hydrolyse die Basen oder Säuren in wäßriger Lösung zugesetzt werden. Nach der Hydrolyse führt man i.a. eine Neutralisation durch, so daß der pH-Wert der hydrolysierten Polymerlösung 2 bis 8, vorzugsweise 3 bis 7 beträgt. Die Neutralisation ist dann erforderlich, wenn ein Fortschreiten der Hydrolyse von teilweise hydrolysierten Polymerisaten vermieden oder verzögert werden soll. Die Hydrolyse kann auch mit Hilfe von Enzymen vorgenommen werden.

Besonders bevorzugt sind solche Pfropfpolymerisate, zu deren Herstellung als Monomer (A) N-Vinylformamid oder Monomergemische aus
(a) 1 bis 99 Gew.-% N-Vinylformamid und
(b) 99 bis 1 Gew.-% Vinylformiat und/oder Vinylacetat
und als Polymer (B) Polyvinylalkohole, die gegebenenfalls bis zu 25 Mol-% mit gesättigten C₁- bis C₄-Carbonsäuren verestert sind, eingesetzt und die anschließend einer Hydrolyse unterworfen werden, bei der aus dem Pfropfpolymerisat 1 bis 100 % der Formylgruppen des aufgepfropften N-Vinylformamids unter Bildung von Einheiten der Formel 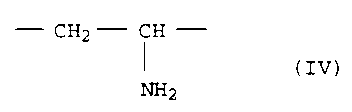 und 2 bis 100 % der Formiat- und/oder Acetatgruppen des aufgepfropften Vinylformiats und/oder Vinylacetats unter Bildung von Einheiten der Formel 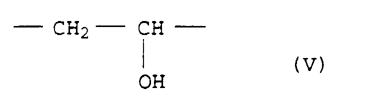 abgespalten werden. Bei der sauren Hydrolyse von Pfropfpolymerisaten, die neben N-Vinylformamid auch Acrynitril einpolymerisiert enthalten, können aus dem zuletzt genannten Monomer auch Acrylamid- und/oder Acrylsäure-Einheiten sowie Imidstrukturen der Formel 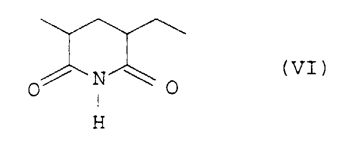 gebildet werden. Der Anteil dieser Strukturen im hydrolysiertem Pfropfpolymeren kann, je nach Menge des einpolymerisierten Acrylnitrils und den Reaktionsbedingungen bei 0 bis 60 mol% der Einheiten (VI) betragen. Die Hydrolyse mit Basen, insbesondere Metallhydroxiden führt dagegen zu weitgehender Bildung von Carboxylatfunktionen.

Die K-Werte der hydrolysierten Pfropfpolymerisate betragen, soweit die Polymerisate in Wasser löslich sind, 8 bis 250, vorzugsweise 10 bis 150, (gemessen an 1%igen wäßrigen Lösungen der Polymeren bei pH 7 und 25°C).

Um bei der Lagerung einen Wirksamkeitsabfall der hydrolysierten Pfropfpolymerisate bei der Anwendung zu verhindern bzw. weitgehend zurückzudrängen und um eine weitgehend farbstabile Polymerlösung zu erhalten, setzt man gegebenenfalls während oder nach der Hydrolyse Antioxidantien, Reduktionsmittel oder Aldehydfänger zu.

Antioxidantien, die meist als Radikalfänger oder UV-Stabilisatoren wirken, sind beispielsweise sekundäre aromatische Amine, Phenol, Alkylphenole, Thioether, Phosphite oder Mischungen von Verbindungen der genannten Stoffklassen. Geeignete sekundäre aromatische Amine sind beispielsweise 4,4'-Bis(tert.-butyl)diphenylamin, 4,4'-Bis (phenylmethyl)diphenylamin oder deren Gemische. Als Antioxidantien geeignete Alkylphenole sind z.B. 2,6-Dimethyl-4-tert.-butylphenol, 2,4,6-Trimethylphenol, 2,4-Ditert.-butyl-6-methylphenol oder deren Gemische. Als Thioether eigenen sich beispielsweise Dialkyl-3,3'-thiodipropionat, Poly-2,3-dimethylphenyl-1,4-disulfid, Bis(2-methyl-4-hydroxy-5-tert.-butyl)sulfid, Dibenzylsulfid und Dialkyldisulfide, wie z.B. Dioctadecyldisulfid.

Phosphite, die als Antioxidantien in Betracht kommen, sind beispielsweise Trisnonylphenylphosphit, Di-(2,4-di-tert.-butylphenyl)-pentaerythritoldiphosphit und Diphenylen-decylphosphit.

Als Reduktionsmittel eignen sich beispielsweise Natriumborhydrid, Natriumcyanoborhydrid und Dithionite, wie Natrium-, Kalium- oder Zinkdithionit.

Aldehydfänger sind beispielsweise NH-Gruppen aufweisende Verbindungen, wie Harnstoff, Ethylenharnstoff, Propylenharnstoff, Melamin, Guanidin, Phenylbiguanidin oder Mischungen der genannten Verbindungen. Andere Aldehydfänger sind z.B. Alkalimetallbisulfite, wie Natrium- oder Kaliumbisulfit.

Antioxidantien, Reduktionsmittel und Aldehydfänger werden jeweils in Mengen von 0,01 bis 20 Gew.-%, vorzugsweise 0,1 bis 16 Gew.-%, bezogen auf die Polymerisate, eingesetzt. Die Zugabe dieser Stoffe kann vor, während oder nach der Hydrolyse der in den Pfropfpolymerisaten enthaltenen Amidgruppen erfolgen.

Die so gewonnenen N-Vinylcarbonsäureamid- und/oder Vinylamin-Einheiten enthaltenden Pfropfpolymerisate werden bei der Herstellung von Papier zur Erhöhung der Trocken- und Naßfestigkeit des Papiers verwendet. Die erfindungsgemäßen Pfropfpolymerisate, die gegebenenfalls hydrolysiert sein können, werden dabei vorzugsweise in wäßriger Lösung eingesetzt und dem Papierstoff vor der Blattbildung in einer Menge von 0,1 bis 10 Gew.-%, bezogen auf trockenen Faserstoff zugesetzt. Die wäßrigen Polymerlösungen können auch auf die Oberfläche des Papiers aufgetragen werden, wobei die anzuwendenden Mengen 0,1 bis 10, vorzugsweise 0,25 bis 3 Gew.-%, bezogen auf trockene Fasern, betragen. Die wäßrigen Lösungen der Polymerisate sind bei allen bekannten Papier-, Pappe- und Kartonqualitäten wirksam, z.B. bei der Herstellung von Hygiene-, Schreib-, Druck- und Verpackungspapieren. Die Papiere bzw. Pappen und Kartons können aus einer Vielzahl von Fasermaterialien hergestellt werden, beispielsweise aus Sulfit- oder Sulfat-Zellstoff (gebleicht oder ungebleicht, Holzschliff, chemo-thermomechanischem Stoff (CTMP), thermomechanischem Stoff (TMP) oder Altpapier oder Mischungen der genannten Faserarten bestehen). Der pH-Wert der Stoffsuspension beträgt 4 bis 9, vorzugsweise 6 bis 8. Die oben beschriebenen Copolymerisate werden vorzugsweise in einer Menge von 0,25 bis 2 Gew.-%, bezogen auf trockenen Faserstoff, der Papierstoffsuspension vor der Blattbildung zugesetzt und führen zu einer Erhöhung der Trocken- und Naßfestigkeit des Papiers.

Die Pfropfpolymerisate, die gegebenenfalls hydrolysiert sein können, eignen sich außerdem als Fixiermittel für Störstoffe und Farbstoffe bei der Herstellung von Papier, Pappe und Karton. Für diesen Anwendungszweck werden die Pfropfpolymerisate dem Papierstoff direkt zugesetzt oder können auch in Form einer Mischung mit dem Harzleim dem Papierstoff zugefügt werden. Bezogen auf 100 Gew.-Teile Harzleim verwendet man z.B. 1 bis 100, vorzugsweise 5 bis 30 Gew.-Teile der Pfropfpolymerisate.

Pfropfpolymerisate, die ein hohes Molekulargewicht haben, z.B. K-Werte in dem Bereich von etwa 150 bis 250, werden als Retentions- und Entwässerungsmittel bei der Herstellung von Papier, Pappe und Karton verwendet. Für diesen Anwendungszweck kommen üblicherweise Mengen an Pfropfpolymerisaten von 0,01 bis 5, vorzugsweise 0,1 bis 2 Gew.-%, bezogen auf trockenen Faserstoff, in Betracht.

Ein weiteres Anwendungsgebiet für die erfindungsgemäßen Pfropfpolymerisate, insbesondere für hydrolysierte Pfropfpolymerisate, besteht in ihrem Einsatz als Stärkekationisierungsmittel. Um Stärke zu kationisieren geht man beispielsweise so vor, daß man eine wäßrige Aufschlämmung von Stärke auf Temperaturen von 80 bis 180°C in Gegenwart der Pfropfpolymerisate erhitzt. Bei Temperaturen oberhalb des Siedepunktes der wäßrigen Reaktionsmischungen arbeitet man in druckdichten verschlossenen Apparaturen. Bezogen auf Stärke verwendet man bei der Stärkekationisierung z.B. 0,1 bis 100 Gew.-%, vorzugsweise 1 bis 10 Gew.-% mindestens eines Pfropfpolymerisates. Man kann sämtliche Stärkesorten mit den erfindungsgemäßen Pfropfpolymerisaten kationisieren, z.B. native Stärken wie Kartoffel-, Reis-, Mais- und Weizenstärke, als auch abgebaute Stärken oder Stärkesorten mit Amylopektingehalten von mindestens 95 bis 100 %, z.B. Wachsmaisstärken oder Wachskartoffelstärken. Für diesen Anwendungszweck kommen insbesondere diejenigen Pfropfpolymerisate in Betracht, bei denen der Hydrolysegrad der einpolymerisierten N-Vinylcarbonsäureamide mindestens 60 % beträgt. Die so hergestellten kationisierten Stärken werden beispielsweise bei der Herstellung von Papier verwendet. Sie bewirken eine Erhöhung der Trocken- und Naßfestigkeit des Papiers und zeichnen sich gegenüber nicht modifizierter Stärke durch eine besonders hohe Retention aus.

Die erfindungsgemäßen Pfropfpolymerisate können außerdem als Dispergiermittel für Pigmente verwendet werden. Die hierfür üblichen Mengen betragen ca. 0,1 bis 5, vorzugsweise 0,5 bis 2 Gew.-%, bezogen auf die Pigmente. Geeignete Pigmente sind beispielsweise Kreide, Clay, Talkum und Titandioxid. Für die Anwendung als Füllstoff bei der Papierherstellung oder zur Herstellung von Papierstreichmassen werden hochkonzentrierte wäßrige Pigmentanschlämmungen hergestellt. Solche Pigmentanschlämmungen können bis zu 75 Gew.-% eines Pigments enthalten.

Die erfindungsgemäßen Pfropfpolymerisate eignen sich außerdem als Promoter bei der Diketenleimung von Papier, Pappe und Karton. Die Pfropfpolymerisate werden für diesen Zweck bei der Herstellung der Diketenemulsion zusammen mit dem Diketen in Wasser emulgiert. Die Diketenemulsionen enthalten beispielsweise 0,05 bis 5 Gew.% eines Pfropfpolymerisats. Die erfindungsgemäßen Pfropfpolymerisate bewirken eine rasche Ausbildung der Diketenleimung. Die Pfropfpolymerisate sind außerdem als Krepphilfsmittel bei der Herstellung von Tissue-Papieren geeignet. Sie werden zu diesem Zweck in Mengen von 0,05 bis 5 Gew.-%, bezogen auf trocken Faserstoff angewendet.

Die in den folgenden Beispielen angegebenen Teile sind Gewichtsteile, die Prozentangaben beziehen sich auf das Gewicht der Stoffe.

Die K-Werte der Polymerisate wurden nach H. Fikentscher, Cellulose-Chemie, Band 13, 58 bis 64 und 71 bis 74 (1932) in 1 gew.-%iger wäßriger Lösung bei 25°C bestimmt.

Die Papierblätter wurden in einem Rapid-Köthen-Laborblattbildner hergestellt. Die Trockenreißlänge wurde gemäß DIN 53112, Blatt 1 und die Naßreißlänge gemäß DIN 53112, Blatt 2, bestimmt.

### Beispiel 1

In einem beheizbaren Reaktor, der mit Rührer, Rückflußkühler, Thermometer, Zulaufvorrichtungen, Stickstoffeinlaß- und auslaßvorrichtungen versehen ist, werden 829,5 g destilliertes Wasser, 1,27 g Phosphorsäure 75 %ig und 0,87 g 50 %ige wäßrige Natronlauge sowie 33 g Polyvinylalkohol mit einen Gehalt an Acetatgruppen von 2 Mol-% und einer Molmasse von 27000 eingefüllt und mit Phosphorsäure bzw. Natronlauge der pH-Wert der Mischung auf 6,5 eingestellt. Nun wird der Reaktorinhalt im schwachen Stickstoffstrom (10 1/Std) der Reaktorinhalt auf 70°C erhitzt und 134,7 g N-Vinylformamid innerhalb von 3 Std. und eine Lösung von 0,53 g 2,2'-Azobis-(2-methylpropionamidin)dihydrochlorid in 100 g destilliertem Wasser innerhalb von 4 Std. gleichmäßig zudosiert. Anschließend wird noch 2 Std. bei 70°C nacherhitzt. Die schwachtrübe, farblose, viskose Lösung hat einen Feststoffgehalt von 16,1 % und einen K-Wert von 81.

### Hydrolyse:

In einer Rührapparatur mit Rückflußkühler, Thermometer und Tropftrichter werden 500 g der vorstehend beschriebenen Lösung des Pfropfpolymeren vorgelegt. Unter intensivem Rühren werden im Verlauf von 15 min 103 g 38 %ige Salzsäure zugetropft. Das Reaktionsgemisch wird daraufhin 6 h lang auf 70°C erhitzt. Der Umsatz wird durch Polyelektrolyttitration bestimmt. Nach dem Abkühlen auf Raumtemperatur wird durch langsames Zutropfen von insgesamt 77,6 g 50 %iger wäßriger Natronlauge ein pH-Wert von 3,8 eingestellt. Man versetzt die Lösung mit 11 g 30%iger Natriumbisulfitlösung und läßt 10 min lang nachrühren. Hydrolysegrad des einpolymerisierten N-Vinylformamids: 91 %, Feststoffgehalt: 21,8 %, Polymergehalt: 12,2 %, K-Wert 80,5.

### Beispiel 2

In einem Reaktor gemäß Beispiel 1 werden 831 g destilliertes Wasser, 0,96 wäßrige 75 %ige Phosphorsäure, 0,66 g 50 %ige wäßrige Natronlauge und 66 g Polyvinylalkohol mit einem Gehalt an Acetatgruppen von 2 Mol-% und einer Molmasse von 27000 eingefüllt und auf einen pH-Wert von 6,5 wie bei Beispiel 1 eingestellt. Nun wird im schwachen Stickstoffstrom (10 1/Std.) auf 70°C erhitzt und 101 g N-Vinylformamid innerhalb von 3 Std. und eine Lösung von 0,4 g 2,2'-Azobis-(2-methylpropionanidin)dihydrochlorid in 100 g destilliertem Wasser innerhalb von 4 Std. bei 70°C gleichmäßig zudosiert. Anschließend wird nach 2 Std. bei 70°C nacherhitzt. Die trübe, farblose Lösung hat einen Feststoffgehalt von 14,9 %. Der K-Wert des Pfropfpolymeren beträgt 72,8.

### Hydrolyse:

In einer Rührapparatur mit Rückflußkühler, Thermometer und Tropftrichter werden 500 g der vorstehend beschriebenen Lösung des Pfropfpolymeren vorgelegt. Unter intensivem Rühren werden im Verlauf von 10 min 74,8 g 38 %ige Salzsäure zugetropft. Die Lösung wird daraufhin 6 h lang auf 70°C erhitzt. Der Umsatz wird durch Polyelektrolyttitration bestimmt. Nach dem Abkühlen auf Raumtemperatur stellt man durch portionsweisen Zusatz von 56 g 50 %iger wäßriger Natronlauge einen pH-Wert von 3,8 ein. Man setzt 10,6 g 30 %ige Natriumbisulfitlösung zu und läßt noch 10 min lang nachrühren. Man erhält 641,4 g einer wäßrigen Lösung eines hydrolysierten Pfropfpolymeren. Der Hydrolysegrad des einpolymerisierten N-Vinylformamids beträgt 85 %. Die Lösung hat einen Feststoffgehalt von 20 % und einen Polymergehalt: 12,5 %. Der K-Wert des hydrolysierten Pfropfpolymerisats beträgt 73.

### Beispiel 3

Beispiel 2 wird mit den Ausnahmen wiederholt, daß man die Polyvinylalkoholmenge auf 99 g erhöht und 67,3 g N-Vinylformamid innerhalb von 3 h zudosiert. Die trübe, farblose Lösung hat einen Feststoffgehalt von 14,3 %. Der K-Wert des Pfropfpolymeren beträgt 62,9.

### Hydrolyse:

Wie in Beispiel 2 angegeben, werden 500 g der oben beschriebenen Pfropfpolymerlösung mit 47 g 38 %iger Salzsäure hydrolysiert. Danach gibt man 35 g 50 %ige Natronlauge von 9,7 g 30 %ige Natriumbisulfitlösung zu. Der Hydrolysegrad des einpolymerisierten N-Vinylformamids beträgt 79 %. Der leicht trübe Lösung hat einen Feststoffgehalt von 17,6 % und einen Polymergehalt von 12,6. Der K-Wert des hydrolysierten Pfropfpolymerisats entspricht dem K-Wert des nicht hydrolysierten Pfropfpolymerisats.

### Beispiel 4

Beispiel 1 wird mit der einzigen Ausnahme wiederholt, daß man anstelle des dort verwendeten Polymeren jetzt einen Polyvinylalkohol einsetzt, der einen Gehalt an Acetatgruppen von 2 Mol-% und eine Molmasse von 61000 hat. Man erhält eine trübe, farblose Lösung mit einem Feststoffgehalt von 15,3. Der K-Wert des Polymeren beträgt 23,1.

### Hydrolyse:

Wie in Beispiel 1 beschrieben, werden 500 g der oben beschriebenen Pfropfpolymerenlösung mit 102 g 38 %iger Salzsäure hydrolysiert. Danach fügt man 69,1 g 50 %iger wäßriger Natronlauge sowie 11 g 30 %iger Natriumbisulfitlösung zu. Der Hydrolysegrad der einpolymerisierten N-Vinylformamideinheiten beträgt 94 %. Die Lösung hat einen Feststoffgehalt von 21,1 % und ein Polymergehalt von 12,3 %. Der K-Wert des hydrolysierten Pfropfpolymerisats beträgt 22,8.

### Beispiel 5

Man verfährt wie in Beispiel 1 beschrieben, verwendet jedoch als Pfropfgrundlage einen Polyvinylalkohol mit einem Acetatgruppengehalt von 12 Mol-% und einer Molmasse von 130000. Man erhält eine trübe, farblose Lösung mit einem Feststoffgehalt von 15,3 %. Das Pfropfpolymerisat hat einen K-Wert von 81.

### Hydrolyse:

500 g der oben beschriebenen wäßrigen Polymerlösung werden wie in Beispiel 1 beschrieben durch Zugabe von 102 g 38%iger Salzsäure hydrolysiert. Nach dem Abkühlen des Reaktionsgemisches fügt man zur Einstellung des pH-Wertes 69,9 g 50%ige wäßrige Natronlauge und 11 g einer 30%igen wäßrigen Natriumbisulfitlösung zu. Die so erhaltene Lösung hat einen Feststoffgehalt von 21,7 % und enthält 12,1 % Polymer. Der Hydrolysegrad des einpolymerisierten N-Vinylformamids beträgt 91 %. Das hydrolysierte Pfropfpolymerisat hat praktisch den gleichen K-Wert wie das nicht hydrolysierte Polymere.

### Beispiel 6

In dem in Beispiel 1 beschriebenen Reaktor werden 395 g destilliertes Wasser, 2,62 g 75 %ige wäßrige Phosphorsäure, 1,8 g 50%ige wäßrige Natronlauge, 1,44 g der wäßrigen Natriumsalzlösung eines molaren Copolymeren aus Maleinsäure und Styrol vom Molgewicht 150 000 und 75,6 g des im Beispiel 1 beschriebenen Polyvinylalkohols vorgelegt und auf einen pH-Wert von 6,5 eingestellt. Die Mischung wird anschließend in einem schwachen Stickstoffstrom unter Rühren auf eine Temperatur von 65°C erhitzt und bei dieser Temperatur innerhalb von 2 Std. mit 34 g Vinylacetat, separat davon innerhalb von 3 Std. mit 81 g N-Vinylformamid und ebenfalls getrennt davon mit einer Lösung von von 0,25 g 2,2'-Azobis-(2-methylpropionamidin)dihydrochlorid innerhalb von 4 Std. gleichmäßig versetzt. Während der Polymerisation wird das Reaktionsgemisch hochviskos. Man verdünnt es daher mit 300 g destilliertem Wasser. Nach Zugabe des Initiators wird das Reaktionsgemisch noch 2 Std. bei 65°C gerührt, dann auf einmal mit einer Lösung von 0,05 % 2,2'-Azobis-(2-methylpropionamidin)dihydrochlorid in 1 g destilliertem Wasser versetzt. Man erhöht dann innerhalb von 4 Std. die Temperatur des Reaktionsgemisches auf 98°C und kühlt die Reaktionslösung dann ab. Man erhält eine klare, farblose Lösung mit einem Feststoffgehalt von 17 %. Das Polymerisat hat einen K-Wert von 76,2.

### Hydrolyse:

500 g der oben beschriebenen Polymerisatlösung werden nach der in Beispiel 1 angegebenen Vorschrift durch Zusatz von 65,4 g 38%iger Salzsäure hydrolysiert. Nach der Hydrolyse fügt man 45,2 g einer 50%igen wäßrigen Natronlauge und 7,5 g einer 30%igen wäßrigen Natriumbisulfitlösung zu. Das Reaktionsgemisch hat einen Feststoffgehalt von 22 % und einen Polymergehalt von 15,5 %. Der Hydrolysegrad des einpolymerisierten N-Vinylformamids beträgt 95 %, der des einpolymerisierten Vinylacetats 35 %. Das hydrolysierte Pfropfpolymerisat hat praktisch den gleichen K-Wert wie das Pfropfpolymerisat vor der Hydrolyse.

### Beispiel 7

In dem in Beispiel 1 beschriebenen Reaktor werden 829 g destilliertes Wasser, 1,27 g 75 %ige wäßrige Phosphorsäure, 0,87 g 50 %ige wäßrige Natronlauge, 66 g des im Beispiel 1 beschriebenen Polyvinylakohols vorgelegt, auf einen pH-Wert von 6,7 eingestellt und unter einem schwachen Stickstoffstrom und unter Rühren auf eine Temperatur von 70°C erhitzt. Sobald der Reaktorinhalt diese Temperatur erreicht hat, dosiert man innerhalb von 2 Std. eine Mischung von 50,5 g N-Vinylformamid und 49,5 g Acrylnitril und getrennt davon eine Lösung von 0,4 g 2,2'-Azobis-(2-methylpropionamidin)dihydrochlorid in 100 g destilliertem Wasser innerhalb von 4 Std. gleichmäßig zu. Man erhält eine 13,7 %ige feine, weiße Polymersuspension.

### Hydrolyse:

500 g der oben beschriebenen Polymersuspension werden in einer mit einem Rührer ausgestatteten Apparatur vorgelegt und innerhalb von 10 min mit 42,4 g 38%iger Salzsäure versetzt. Die Suspension wird 8 Std. bei einer Temperatur von 70°C gerührt. Danach läßt man das Reaktionsgemisch abkühlen, verdünnt die viskose Lösung mit 140 g Wasser und stellt mit Zugabe von 34,0 g 25%iger wäßriger Natronlauge einen pH-Wert von 2,5 ein. Anschließend gibt man noch 11,7 g einer 30%igen wäßrigen Natriumbisulfitlösung zu und rührt das Reaktionsgemisch noch 15 min. Es hat einen Feststoffgehalt von 10,8 % und einen Polymergehalt von 6,9 %. Der Hydrolysegrad des einpolymerisierten N-Vinylformamids beträgt 90 %. Der K-Wert des hydrolysierten Pfropfpolymerisats entspricht dem des nicht hydrolysierten Polymeren.

### Beispiel 8

In dem in Beispiel 1 beschriebenen Reaktor werden 829 g destilliertes Wasser, 1,27 g 75 %ige wäßrige Phosphorsäure, 0,87 g 50 %ige wäßrige Natronlauge, 66 g des im Beispiel 1 beschriebenen Polyvinylalkohols vorgelegt, auf einen pH-Wert von 7,3 eingestellt und unter einem schwachen Stickstoffstrom und unter Rühren auf eine Temperatur von 70°C erhitzt. Sobald der Reaktorinhalt diese Temperatur erreicht hat, dosiert man innerhalb von 2 Std. jeweils 80,8 g N-Vinylformamid, 19,8 g N-Vinylpyrrolidon und getrennt davon eine Lösung von 0,4 g 2,2'-Azobis-(2-methylpropionamidin)dihydrochlorid in 100 g destilliertem Wasser innerhalb von 4 Std. gleichmäßig zu. Man erhält eine 15,3 %ige trübe, farblose Lösung. Das Pfropfpolymerisat hat einen K-Wert von 77,6.

### Hydrolyse:

Wie in Beispiel 1 beschrieben, werden 500 g der zuvor beschriebenen Pfropfpolymerenlösung mit 70,5 g 33 %iger Salzsäure hydrolysiert und anschließend mit 54,8 g 25 %iger Natronlauge und 10,1 g 30 %iger Natriumsulfitlösung versetzt. Der pH-Wert des Produkts beträgt 2,5, der Hydrolysegrad der einpolymerisierten N-Vinylformamideinheiten 100 %. Die Lösung hat einen Feststoffgehalt von 17 % und einen Polymergehalt von 12,7 %. Der K-Wert des hydrolysierten Pfropfpolymeren entspricht dem K-Wert des nicht hydrolysierten Polymers.

### Beispiel 9

In dem in Beispiel 1 beschriebenen Reaktor werden 729 g destilliertes Wasser, 1,27 g 75 %ige wäßrige Phosphorsäure, 0,87 g 50 %ige wäßrige Natronlauge, 66 g des im Beispiel 1 beschriebenen Polyvinylalkohols vorgelegt, auf einen pH-Wert von 6,5 eingestellt und unter einem schwachen Stickstoffstrom und unter Rühren auf eine Temperatur von 70°C erhitzt. Sobald der Reaktorinhalt diese Temperatur erreicht hat, dosiert man innerhalb von 2 Std. jeweils 70,7 g N-Vinylformamid, und 160 g einer mit NaOH auf pH 7,3 eingestellten wäßrigen Acrylsäurelösung (29,7 g Acrylsäure) und getrennt davon eine Lösung von 0,4 g 2,2'-Azobis-(2-methylpropionamidin)dihydrochlorid in 100 g destilliertem Wasser innerhalb von 4 Std. gleichmäßig zu. Man erhält eine 15,5 Ige trübe, farblose Lösung. Das Pfropfpolymerisat hat einen K-Wert von 77,6.

### Hydrolyse:

Wie in Beispiel 1 beschrieben, werden 500 g der oben beschriebenen Pfropfpolymerenlösung mit 72,5 g 38 %iger Salzsäure hydrolysiert. Dann gibt man 38,7 g 50 %ige wäßrige Natronlauge und 12 g 30 %iger Natriumbisulfitlösung zu. Der pH-Wert der Lösung beträgt 2,5, der Hydrolysegrad der einpolymerisierten Vinylformamideinheiten 95 %. Die Lösung hat einen Feststoffgehalt von 18 % und einen Polymergehalt von 12,4 %. Der K-Wert des hydrolysierten Pfropfpolymeren beträgt 77.

### Vergleichsbeispiel 1

Zu 300 g einer 15,3 %igen wäßrigen Polyvinylformamidlösung, (K-Wert des Polymeren beträgt 85) werden 74 g 38 %ige Salzsäure (120 Mol-%, bezogen auf N-Vinylformamid) getropft. Darauf erhitzt man das Gemisch ca. 5 Std. lang auf 70°C. Der Hydrolysegrad (>93 %) wird durch Polyelektrolyttitration kontrolliert. Nach Abkühlung wird der pH-Wert der Lösung mit 50 %iger Natronlauge (40,6 g) auf 3,5 erhöht. Der Polymergehalt der Lösung beträgt 10,9 Gew.-%.

### Vergleichsbeispiel 2

Ein Copolymerisat aus 70 Gew.-% N-Vinylformamid und 30 Gew.-% Vinylacetat mit einem K-Wert von 85 wird gemäß den Angaben in der US-A-4 978 427 hergestellt und durch Zugabe von 110 Mol-% einer 38 %igen Salzsäure pro Mol N-Vinylformamid-Anteil im Polymerisat soweit hydrolysiert, daß mindestens 90 % des einpolymerisierten N-Vinylformamids und mindestens 80 % des einpolymerisierten Vinylacetats hydrolysiert sind.

### Vergleichsbeispiel 3

Handelsübliches Neutralnaßfestharz auf Basis eines Harnstoff-Formaldehyd-Kondensationsproduktes.

### Anwendungstechnische Beispiele

### Beispiel 10

In einem Rapid-Köthen-Blattbildner werden Blätter mit einem Flächengewicht von 80 g/m² hergestellt. Der Papierstoff bestand aus 50 % gebleichtem Laubholzsulfit- und 50 % gebleichtem Nadelholzsulfitzellstoff mit einem Mahlgrad von 32°SR (Schopper-Riegler) in 0,5 %iger wäßriger Suspension. Der pH-Wert der Stoffsuspension betrug 7,0. Die Stoffsuspension wurde in 8 gleiche Teile geteilt. Zu 7 Proben wurden die unter (b) bis (h) angegebenen Stoffe zugesetzt:
(a) Die Stoffsuspension enthielt keine weiteren Zusätze.
(b) Die Stoffsuspension wurde mit 1 %, bezogen auf trockenen Faserstoff, eines handelsüblichen Harzes gemäß Vergleichsprodukts 3 versetzt.
(c) Der Stoffsuspension wurde 1 %, bezogen auf trockenen Faserstoff, des hydrolysierten Polyvinylformamids gemäß Vergleichsbeispiel 1 versetzt.
(d-h) Die Stoffsuspension wurde mit 1 %, bezogen auf trockenen Faserstoff, der nach Beispiel 1 bis 5 hergestellten hydrolysierten Pfropfpolymeren versetzt (Beispiele gemäß Erfindung).

Aus den oben beschriebenen Papierstoffsuspensionen (a) bis (h) wurden anschließend auf einem Rapid-Köthen-Blattbildner die Blätter (a) bis (h) hergestellt. Von den erhaltenen Blättern bestimmte man die Naßreißlänge und die Trockenreißlänge. Die Ergebnisse sind in Tabelle 1 angegeben.

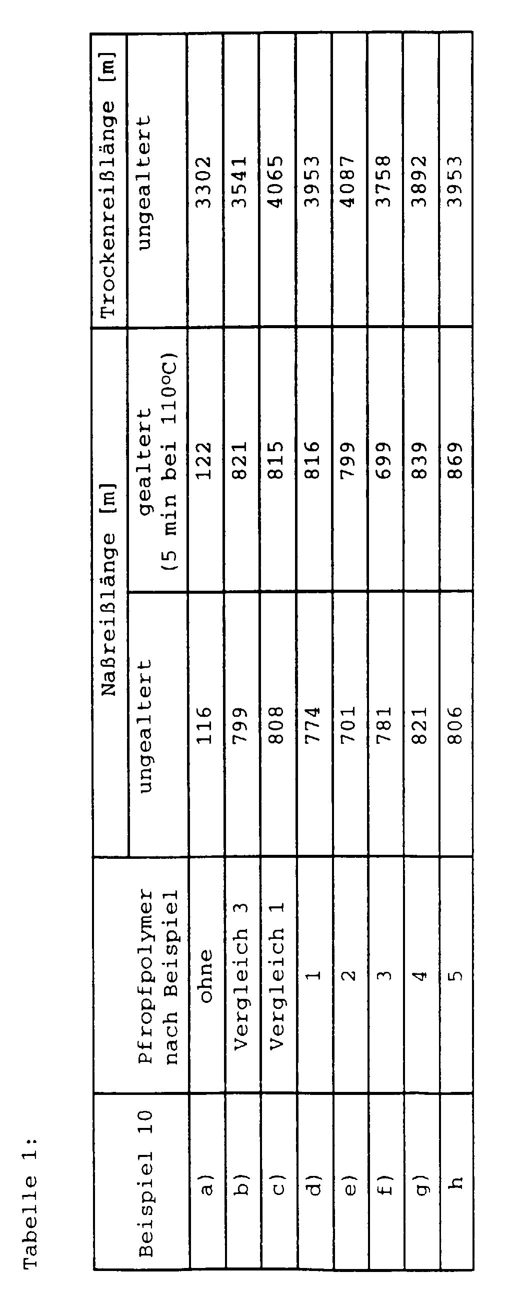

### Beispiel 11

In einem Rapid-Köthen-Blattbildner werden Blätter mit einem Flächengewicht von 80 g/m² hergestellt. Der Papierstoff bestand aus 50 % gebleichtem Laubholzsulfit- und 50 % gebleichtem Nadelholzsulfitzellstoff mit einem Mahlgrad von 32°SR (Schopper-Riegler) in 0,5 %iger wäßriger Suspension. Der pH-Wert der Stoffsuspension betrug 4,5. Die Stoffsuspension wurde in 8 gleiche Teile geteilt. Zu 7 Proben wurden die unter (b) bis (h) angegebenen Stoffe zugesetzt:
(a) Die Stoffsuspension enthielt keine weiteren Zusätze.
(b) Die Stoffsuspension wurde mit 1 %, bezogen auf trockenen Faserstoff, des handelsüblichen Produkts gemäß Vergleichsbeispiel 3 versetzt.
(c) Der Stoffsuspension wurde 1 %, bezogen auf trockenen Faserstoff, des Produkts gemäß Vergleichsbeispiel 2 versetzt.
(d-h) Die Stoffsuspension wurde mit 1 %, bezogen auf trockenen Faserstoff, der nach den Beispielen 1 bis 5 hergestellten hydrolysierten Pfropfpolymeren versetzt (Beispiele gemäß Erfindung).

Aus den oben beschriebenen Papierstoffsuspensionen (a) bis (h) wurden Papierblätter hergestellt und die Naßreißlänge und die Trockenreißlänge bestimmt. Die Ergebnisse sind in Tabelle 2 dargestellt.

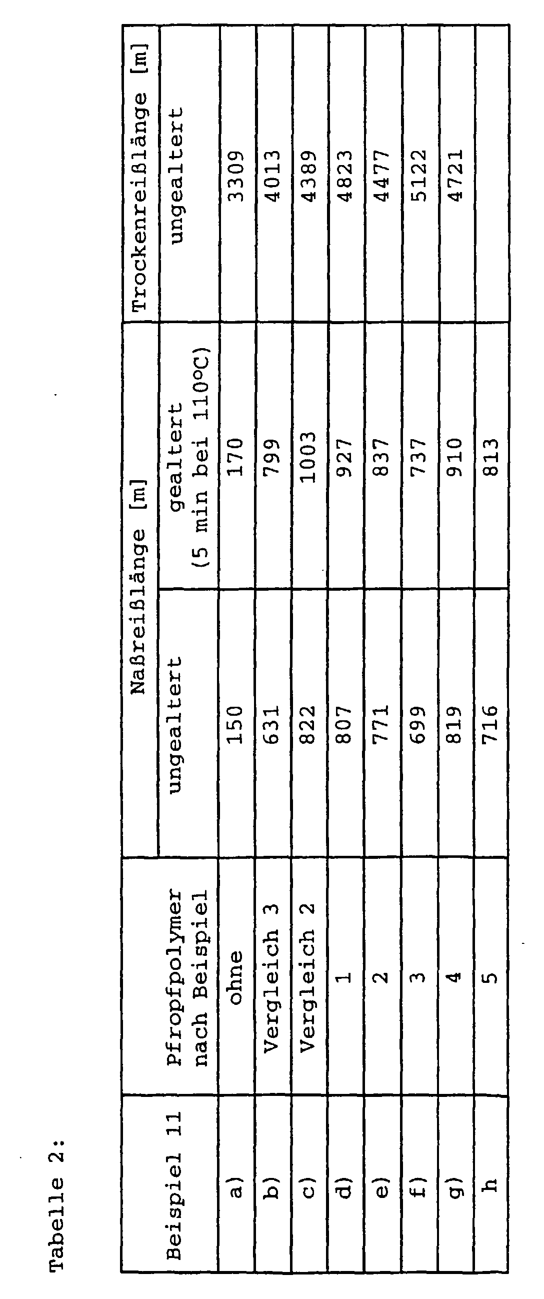

## Patentansprüche

1. Pfropfpolymerisate aus Vinylester- und/oder Vinylalkohol-Einheiten enthaltenden Polymerisaten und ethylenisch ungesättigten Verbindungen, dadurch gekennzeichnet, daß sie erhältlich sind durch radikalisch initiierte Polymerisation von
(A) Monomeren oder Monomergemischen aus
(a) 1 bis 100 Gew.-% N-Vinylformamid,
(b) 0 bis 99 Gew.-% anderen, mit den Monomeren (a) copolymerisierbaren monoethylenisch ungesättigten Monomeren und
(c) 0 bis 5 Gew.-% mindestens zwei ethylenisch ungesättigte, nicht konjugierte Doppelbindungen im Molekül aufweisenden Monomeren
in Gegenwart von
(B) Polymerisaten, die Einheiten von Vinylestern von gesättigten C₁- bis C₄-Carbonsäuren und/oder Vinylalkohol-Einheiten enthalten, oder von Mischungen, die diese Polymerisate und mindestens 3 Alkylenoxid-Einheiten aufweisende Polymerisate oder Polytetrahydrofuran enthalten,
im Gewichtsverhältnis (A):(B) von (95 bis 10):(5 bis 90) und anschließende Abspaltung von 1 bis 100 % der Formylgruppen des aufgepfropften N-Vinylformamids durch Hydrolyse unter Bildung von Einheiten der Formel

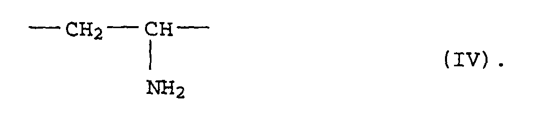

2. Pfropfpolymerisate nach Anspruch 1, dadurch gekennzeichnet, daß als Monomer (A) N-Vinylformamid und als Polymer (B) Polyvinylalkohole, die gegebenenfalls bis zu 25 Mol-% mit gesättigten C₁- bis C₄-Carbonsäuren verestert sind, eingesetzt werden und daß aus dem Pfropfpolymerisat 1 bis 100 % der Formylgruppen des aufgepfropften N-Vinylformamids durch Hydrolyse unter Bildung von Einheiten der Formel 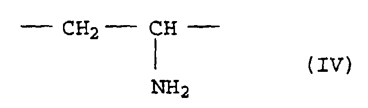 abgespalten werden.

3. Pfropfpolymerisate nach Anspruch 1, dadurch gekennzeichnet, daß als (A) Monomergemische aus
(a) 1 bis 99 Gew.-% N-Vinylformamid und
(b) 99 bis 1 Gew.-% Vinylformiat und/oder Vinylacetat
und als Polymer (B) Polyvinylalkohole, die gegebenenfalls bis zu 25 Mol-% mit gesättigten C₁- bis C₄-Carbonsäuren verestert sind, eingesetzt werden und daß aus dem Pfropfpolymerisat 1 bis 100 % der Formylgruppen des aufgepfropften N-Vinylformamids durch Hydrolyse unter Bildung von Einheiten der Formel 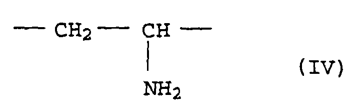 und 2 bis 100 % der Formiat- und/oder Acetatgruppen des aufgepfropften Vinylformiats und/oder Vinylacetats unter Bildung von Einheiten der Formel 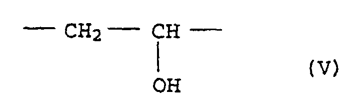 abgespalten werden.

4. Pfropfpolymerisate nach Anspruch 2, dadurch gekennzeichnet, daß aus dem Pfropfpolymerisat 30 bis 95 % der Formylgruppen abgespalten werden.

5. Pfropfpolymerisate nach Anspruch 3, dadurch gekennzeichnet, daß aus dem Pfropfpolymerisat 30 bis 95 % der Formylgruppen und 30 bis 95 % der Formiat- und/oder Acetatgruppen aus den aufgepfropften Monomeren abgespalten werden.

6. Verfahren zur Herstellung von Pfropfpolymerisaten aus Vinylester- und/oder Vinylalkohol-Einheiten enthaltenden Polymerisaten und ethylenisch ungesättigten Verbindungen, dadurch gekennzeichnet, daß man
(A) Monomere oder Monomergemische aus
(a) 1 bis 100 Gew.-% N-Vinylformamid,
(b) 0 bis 99 Gew.-% anderen, mit den Monomeren (a) copolymerisierbaren monoethylenisch ungesättigten Monomeren und
(c) 0 bis 5 Gew.-% mindestens zwei ethylenisch ungesättigten, nicht konjugierte Doppelbindungen im Molekül aufweisenden Monomeren
in Gegenwart von
(B) Polymerisaten, die Einheiten von Vinylestern von gesättigten C₁- bis C₄-Carbonsäuren und/oder Vinylalkohol-Einheiten enthalten, oder von Mischungen, die diese Polymerisate und mindestens 3 Alkylenoxid-Einheiten aufweisende Polymerisate oder Polytetrahydrofuran enthalten,
im Gewichtsverhältnis (A):(B) von (95 bis 10):(5 bis 90) radikalisch aufpfropft und anschließend
Formylgruppen durch Hydrolyse aus dem aufgepfropften N-Vinylformamid des Pfropfpolymerisats zumindest teilweise unter Bildung von Einheiten der Formel 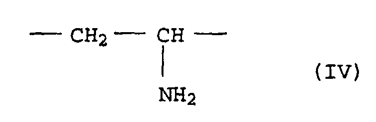 abspaltet.

7. Verfahren zur Herstellung von Pfropfpolymerisaten nach Anspruch 6, dadurch gekennzeichnet, daß als (A) Monomergemische aus
(a) 1 bis 99 Gew.-% N-Vinylformamid und
(b) 99 bis 1 Gew.-% Vinylformiat und/oder Vinylacetat
und als Polymer (B) Polyvinylalkohole, die gegebenenfalls bis zu 25 Mol-% mit C₁- bis C₄-Carbonsäuren verestert sind, eingesetzt werden und daß aus dem Pfropfpolymerisat 1 bis 100 % der Formylgruppen des aufgepfropften N-Vinylformamids unter Bildung von Einheiten der Formel 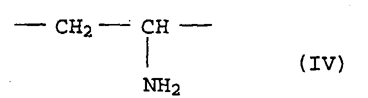 und 2 bis 100 % der Formiat- und/oder Acetatgruppen des aufgepfropften Vinylformiats und/oder Vinylacetats unter Bildung von Einheiten der Formel 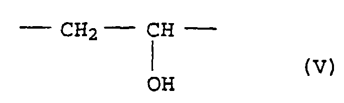 abgespalten werden.

8. Verwendung der Pfropfpolymerisate nach einem der Ansprüche 1 bis 5, bei der Herstellung von Papier, Pappe und Karton als Trocken- und Naßverfestigungsmittel, als Fixiermittel für Störstoffe und Farbstoffe, als Retentions- und Entwässerungsmittel und als Promoter bei der Diketenleimung.

9. Verwendung der Pfropfpolymerisate nach einem der Ansprüche 1 bis 5 als Stärkekationisierungsmittel.

10. Verwendung der Pfropfpolymerisate nach einem der Ansprüche 1 bis 5 als Dispergiermittel für Pigmente.

11. Verwendung der Pfropfpolymerisate nach einem der Ansprüche 1 bis 5 als Krepphilfsmittel bei der Herstellung von Tissuepapieren.

## Claims

1. A graft polymer of a polymer containing vinyl ester or vinyl alcohol units and an ethylenically unsaturated compound, which graft polymer is obtainable by free radical polymerization of
(A) monomers or monomer mixtures comprising
(a) from 1 to 100% by weight of N-vinylformamide
(b) from 0 to 99% by weight of other monoethylenically unsaturated monomers copolymerizable with the monomers (a) and
(c) from 0 to 5% by weight of monomers having at least two ethylenically unsaturated, nonconjugated double bonds in the molecule,
in the presence of
(B) polymers which contain units of vinyl esters of saturated C₁-C₄-carboxylic acids or vinyl alcohol units, or of mixtures which contain these polymers and polymers having at least 3 alkylene oxide units or polytetrahydrofuran,
in a weight ratio (A):(B) of from 95:5 to 10:90 and subsequent elimination of from 1 to 100% of the formyl groups of the grafted-on N-vinylformamide by hydrolysis with formation of units of the formula

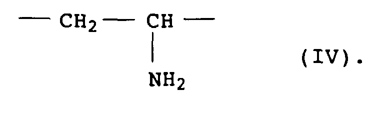

2. A graft polymer as claimed in claim 1, wherein N-vinylformamide is used as monomer (A) and polyvinyl alcohols which may be esterified to a degree of up to 25 mol% with saturated C₁-C₄-carboxylic acids are used as polymer (B), and from 1 to 100% of the formyl groups of the grafted-on N-vinylformamide are eliminated from the graft polymer by hydrolysis with formation of units of the formula

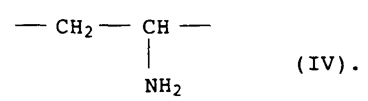

3. A graft polymer as claimed in claim 1, wherein monomer mixtures of
(a) from 1 to 99% by weight of N-vinylformamide and
(b) from 99 to 1% by weight of vinyl formate or vinyl acetate
are used as (A) and polyvinyl alcohols which may be esterified to a degree of up to 25 mol% with saturated C₁-C₄-carboxylic acids are used as polymer (B), and from 1 to 100% of the formyl groups of the grafted-on N-vinylformamide are eliminated from the graft polymer by hydrolysis with formation of units of the formula 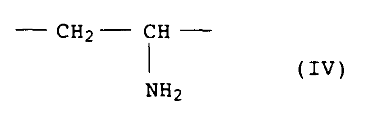 and from 2 to 100% of the formate or acetate groups of the grafted-on vinyl formate or vinyl acetate are eliminated with formation of units of the formula

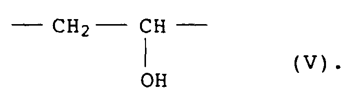

4. A graft polymer as claimed in claim 2, wherein from 30 to 95% of the formyl groups are eliminated from the graft polymer.

5. A graft polymer as claimed in claim 3, wherein from 30 to 95% of the formyl groups are eliminated from the graft polymer and from 30 to 95% of the formate or acetate groups are eliminated from the grafted-on monomers.

6. A process for the preparation of a graft polymer of a polymer containing vinyl ester or vinyl alcohol units and an ethylenically unsaturated compound, wherein
(A) monomers or monomer mixtures comprising
(a) from 1 to 100% by weight of N-vinylformamide,
(b) from 0 to 99% by weight of other monoethylenically unsaturated monomers copolymerizable with the monomers (a) and
(c) from 0 to 5% by weight of monomers having at least two ethylenically unsaturated, nonconjugated double bonds in the molecule
are subjected to free radical grafting in the presence of
(B) polymers which contain units of vinyl esters of saturated C₁-C₄-carboxylic acids or vinyl alcohol units, or of mixtures which contain these polymers and polymers having at least 3 alkylene oxide units or polytetrahydrofuran,
in a weight ratio (A):(B) of from 95:5 to 10:90, and formyl groups are then eliminated from the grafted-on N-vinylformamide of the graft polymer with formation of units of the formula

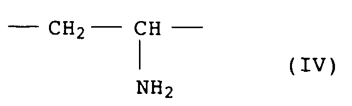

7. A process for the preparation of graft polymers as claimed in claim 6, wherein monomer mixtures of
(a) from 1 to 99% by weight of N-vinylformamide and
(b) from 99 to 1% by weight of vinyl formate or vinyl acetate
are used as (A) and polyvinyl alcohols which may be esterified to a degree of up to 25 mol% with C₁-C₄-carboxylic acids are used as polymer (B), and from 1 to 100% of the formyl groups of the grafted-on N-vinylformamide are eliminated from the graft polymer with formation of units of the formula 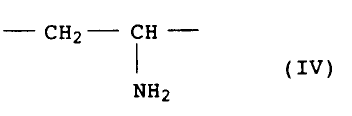 and from 2 to 100% of the formate or acetate groups of the grafted-on vinyl formate or vinyl acetate are eliminated with formation of units of the formula

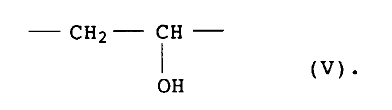

8. Use of a graft polymer as claimed in any of claims 1 to 5 in the production of paper, board and cardboard as a dry or wet strength agent, as a fixing agent for interfering substances and dyes, as a retention or drainage aid and as a promoter in diketene sizing.

9. Use of a graft polymer as claimed in any of claims 1 to 5 as starch cationization agent.

10. Use of a graft polymer as claimed in any of claims 1 to 5 as a dispersant for pigments.

11. Use of a graft polymer as claimed in any of claims 1 to 5 as a creping assistant in the production of tissue papers.

## Revendications

1. Copolymère greffé à base de polymères contenant des motifs ester vinylique et/ou alcool vinylique et de composés à insaturation éthylénique, caractérisé en ce qu'ils peuvent être obtenus par polymérisation à amorçage radicalaire de
(A) monomères ou mélanges de monomères à base de
(a) 1 à 100% en poids de N-vinylformamide,
(b) 0 à 99% en poids d'autres monomères à insaturation monoéthylénique, copolymérisables avec les monomères (a) et
(c) 0 à 5% en poids de monomères comportant au moins deux doubles liaisons non conjuguées à insaturation éthylénique dans la molécule,
en présence de
(B) polymères contenant des motifs d'esters vinyliques d'acides carboxyliques saturés en C₁-C₄, et/ou des motifs alcool vinylique, ou de mélanges contenant ces polymères et des polymères présentant au moins 3 motifs oxyde d'alkylène ou du polytétrahydrofurane,
dans un rapport en poids (A):(B) de (95 à 10):(5 à 90) suivie de la libération de 1 à 100% en poids des groupements formyle du N-vinylformamide de greffage, par hydrolyse en formant des motifs de formule

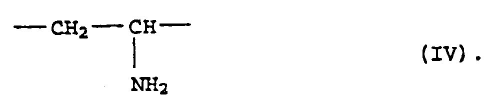

2. Polymères greffés selon la revendication 1, caractérisé en ce que l'on utilise du N-vinylformamide en tant que monomère (A), et en tant que polymère (B) des poly(alcool vinylique)s pouvant éventuellement être estérifiés jusqu'à 25% en moles par des acides carboxyliques saturés en C₁-C₄, et en ce que l'on libère du polymère greffé, 1 à 100% des groupements formyle du N-vinylformamide de greffage par hydrolyse en formant des motifs de formule

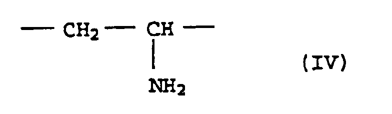

3. Polymères greffés selon la revendication 1, caractérisé en ce que l'on utilise en tant que (A) des mélanges de monomères à base de
(a) 1 à 99% en poids de N-vinylformamide et
(b) 99 à 1% en poids de formiate de vinyle et/ou d'acétate de vinyle,
et en tant que polymère (B) des poly(alcool vinylique)s pouvant éventuellement être estérifiés jusqu'à 25% en moles par des acides carboxyliques saturés en C₁-C₄, et en ce que l'on libère du polymère greffé, 1 à 100% des groupements formyle du N-vinylformamide de greffage par hydrolyse en formant des motifs de formule 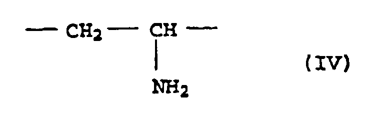 et 2 à 100% des groupements formiate et/ou acétate du formiate de vinyle et/ ou de l'acétate de vinyle de greffage en formant des motifs de formule

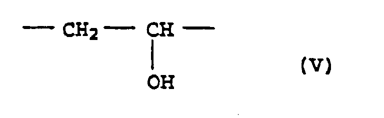

4. Polymère greffé selon la revendication 2, caractérisé en ce que l'on libère 30 à 95% des groupements formyle du polymère greffé.

5. Polymère greffé selon la revendication 3, caractérisé en ce que l'on libère 30 à 95% des groupements formyle du polymère greffé et 30 à 95% des groupements formiate et/ou acétate des monomères de greffage.

6. Procédé de préparation de polymères greffés à base de polymères contenant des motifs ester vinylique et/ou alcool vinylique et de composés à insaturation éthylénique, caractérisé en ce que l'on greffe de façon radicalaire
(A) des monomères ou mélanges de monomères à base de
(a) 1 à 100% en poids de N-vinylformamide,
(b) 0 à 99% en poids d'autres monomères à insaturation monoéthylénique, copolymérisables avec les monomères (a) et
(c) 0 à 5% en poids de monomères comportant au moins deux doubles liaisons non conjuguées à insaturation éthylénique dans la molécule,
en présence de
(B) polymères contenant des motifs d'esters vinyliques d'acides carboxyliques saturés en C₁-C₄, et/ou des motifs alcool vinylique, ou de mélanges contenant ces polymères et des polymères présentant au moins 3 motifs oxyde d'alkylène ou du polytétrahydrofurane,
dans un rapport en poids (A):(B) de (95 à 10):(5 à 90) suivie de la libération de groupements formyle par hydrolyse du N-vinylformamide de greffage du polymère greffé en formant au moins partiellellement des motifs de formule

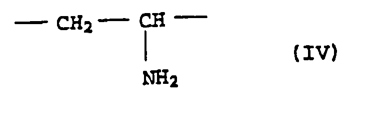

7. Procédé de préparation de polymères greffés selon la revendication 6, caractérisé en ce que l'on utilise en tant que (A) des mélanges de monomères à base de
(a) 1 à 99% en poids de N-vinylformamide et
(b) 99 à 1% en poids de formiate de vinyle et/ou d'acétate de vinyle, et en tant que polymère (B) des poly(alcool vinylique)s pouvant éventuellement être estérifiés jusqu'à 25% en moles par des acides carboxyliques saturés en C₁-C₄, et en ce que l'on libère du polymère greffé, 1 à 100% des groupements formyle du N-vinylformamide de greffage en formant des motifs de formule 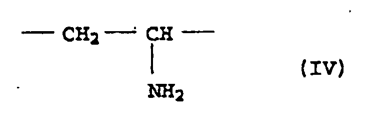
et 2 à 100% des groupements formiate et/ou acétate du formiate de vinyle et/ ou de l'acétate de vinyle de greffage en formant des motifs de formule

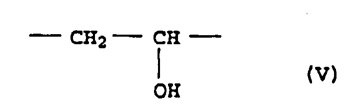

8. Utilisation de polymères greffés selon l'une quelconque des revendications 1 à 5, pour la fabrication de papier, de carton-pâte et de carton en tant qu'agent de renfort à sec et par voie humide, en tant qu'agent de fixation pour matières parasites et pour colorants, en tant qu'agents de rétention et de déshydratation et en tant que promoteur lors de l'encollage au dicétène.

9. Utilisation de polymères greffés selon l'une quelconque des revendications 1 à 5 en tant qu'agent de cationisation d'amidon.

10. Utilisation de polymères greffés selon l'une quelconque des revendications 1 à 5 en tant qu'agent de dispersion pour pigments.

11. Utilisation de polymères greffés selon l'une quelconque des revendications 1 à 5 en tant agent auxiliaire de crêpage lors de la préparation de tissus ouatés.
